# EUROPEAN PATENT APPLICATION

(11) **EP 3 819 833 A1**
(43) Date of publication of application: **12.05.2021**
(21) Application number: 19830285.3
(22) Date of filing: 22.05.2019
(51) Int. Cl.: G06Q 10/04, G06Q 10/08, G06Q 50/30

(54) **INFORMATION PROCESSING DEVICE, INFORMATION PROCESSING METHOD, AND PROGRAM**

(30) Priority: 04.07.2018 JP 2018127684
(71) Applicant: Sony Corporation, 108-0075 Tokyo (JP)
(72) Inventor: UMEDA, Tetsuo, Tokyo 108-0075 (JP)
(74) Representative: 2SPL Patentanwälte PartG mbB
(86) International application number: PCT/JP2019/020336
(87) International publication number: WO 2020/008749

(57) **Abstract**

A structure capable of optimizing setting of a prediction target space is proposed. An information processing device includes an acquisition unit (122) configured to acquire demand data for each prediction target space of a moving body that conveys a conveyance object loaded onto the moving body; a learning unit (123) configured to learn a prediction model for predicting the demand data for each prediction target space; and a determination unit (126) configured to determine whether to combine or divide the prediction target space based on prediction accuracy of the prediction model.

## Description

### [Technical Field]

The present disclosure relates to an information processing device, an information processing method, and a program.

### [Background Art]

In recent years, many technologies for moving bodies, such as drones and automatic driving technologies, have been developed. One such technology is a technology for efficiently transporting a package using a moving body.

For example, PTL 1 discloses a technology for partitioning the ground into netted meshes and predicting a future number of passengers for each mesh with regard to a demand prediction of taxis.

### [Citation List]

### [Patent Literature]

[PTL 1]

### JP 2012-043296 A

### [Summary]

### [Technical Problem]

In the technology disclosed in PTL 1 above, granularity of a prediction target space (that is, the size of a mesh) is set uniformly and fixedly. When the set mesh is small, the number of pieces of data for each mesh is insufficient and there is concern of a mesh with bad prediction accuracy arising. On the other hand, in order to improve the prediction accuracy, the mesh can be set to be larger. However, the mesh is preferably smaller in consideration of a purpose of a prediction result. This is because a place in which a demand is predicted to arise is preferably rough. However, PTL 1 above does not present any plan with regard to the size of a mesh.

Accordingly, the present technology proposes a structure capable of optimizing setting of a prediction target space.

### [Solution to Problem]

According to the present disclosure, an information processing device includes: an acquisition unit configured to acquire demand data for each prediction target space of a moving body that conveys a conveyance object loaded onto the moving body; a learning unit configured to learn a prediction model for predicting the demand data for each prediction target space; and a determination unit configured to determine whether to combine or divide the prediction target space based on prediction accuracy of the prediction model.

According to the present disclosure, an information processing method is performed by a processor. The method includes: acquiring demand data for each prediction target space of a moving body that conveys a conveyance object loaded onto the moving body; learning a prediction model for predicting the demand data for each prediction target space; and determining whether to combine or divide the prediction target space based on prediction accuracy of the prediction model.

According to the present disclosure, a program causes a computer to function as: an acquisition unit configured to acquire demand data for each prediction target space of a moving body that conveys a conveyance object loaded onto the moving body; a learning unit configured to learn a prediction model for predicting the demand data for each prediction target space; and a determination unit configured to determine whether to combine or divide the prediction target space based on prediction accuracy of the prediction model.

### [Advantageous Effects of Invention]

According to the present disclosure described above, it is possible to provide a structure capable of optimizing setting of a prediction target space. The foregoing advantageous effects are not necessarily restrictive and any advantageous effect described in the present specification or other advantageous effects ascertained from the present specification can be obtained in addition to the foregoing advantageous effects or instead of the foregoing advantageous effects.

### [Brief Description of Drawings]

[Fig. 1]

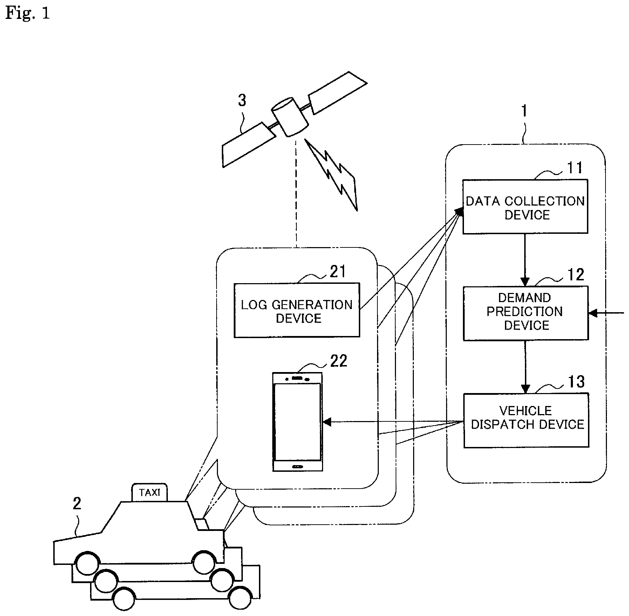

   Fig. 1 is a diagram illustrating an example of a configuration of a moving body control system according to an embodiment of the present disclosure.
[Fig. 2]

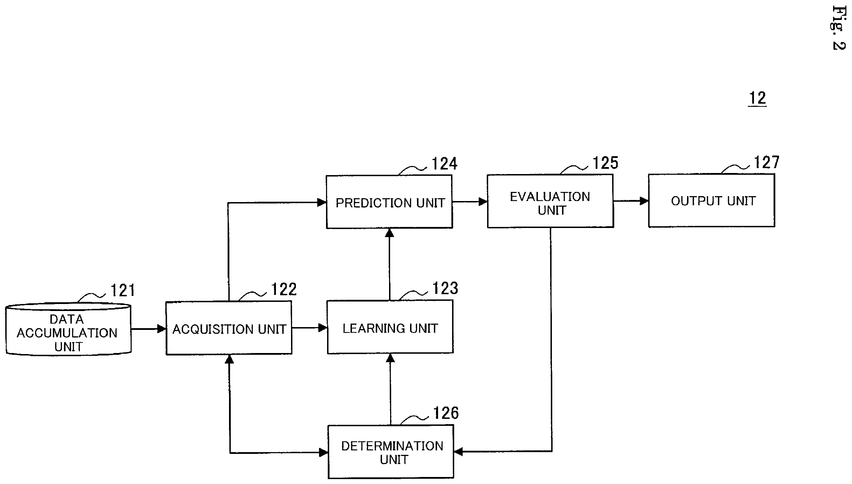

   Fig. 2 is a block diagram illustrating an example of a functional configuration of a demand prediction device according to the embodiment.
[Fig. 3]

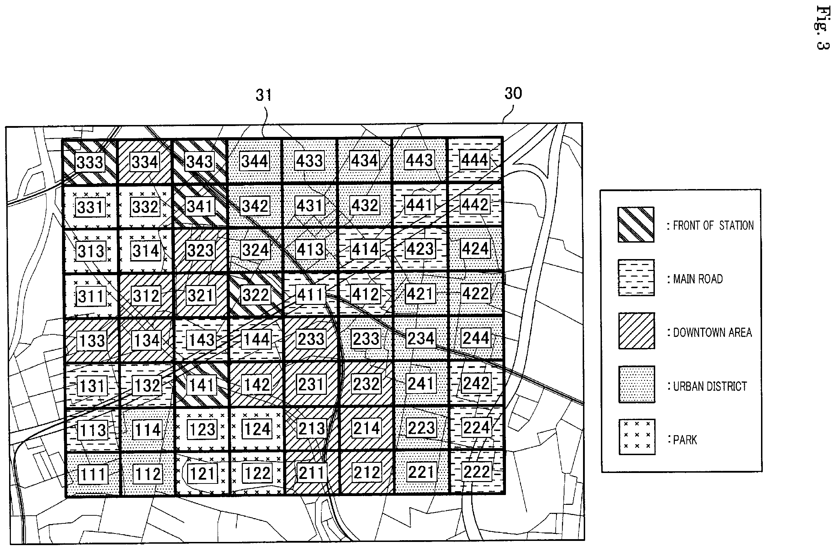

   Fig. 3 is a diagram illustrating an example of setting of a unit cell according to the embodiment.
[Fig. 4]

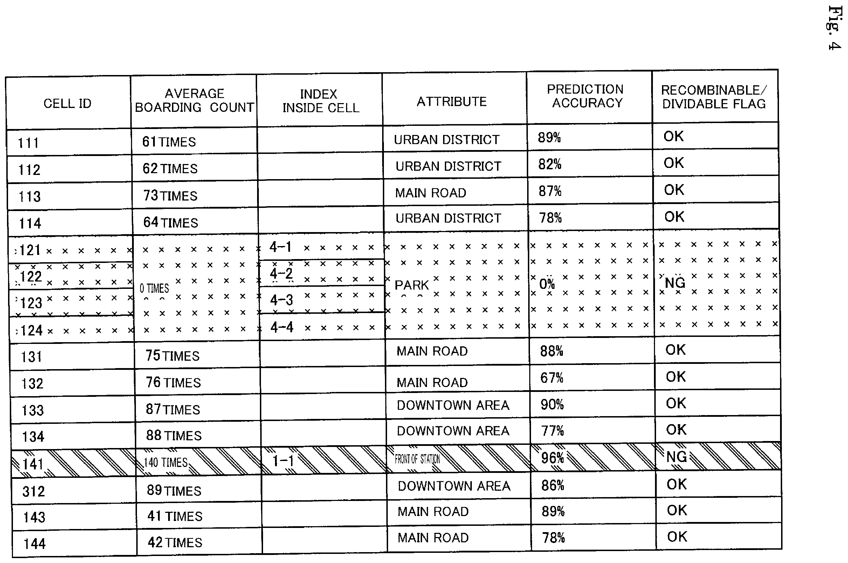

   Fig. 4 is a diagram illustrating an example of a cell list generated in a cell combination process associated with a first past demand prediction performed in an initial state.
[Fig. 5]

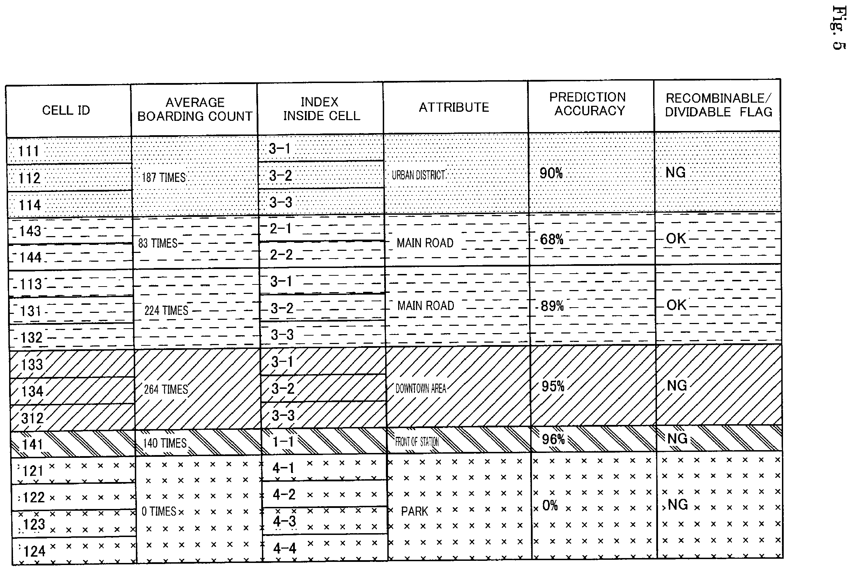

   Fig. 5 is a diagram illustrating an example of a cell list generated in a cell combination process associated with a second past demand prediction performed in the initial state.
[Fig. 6]

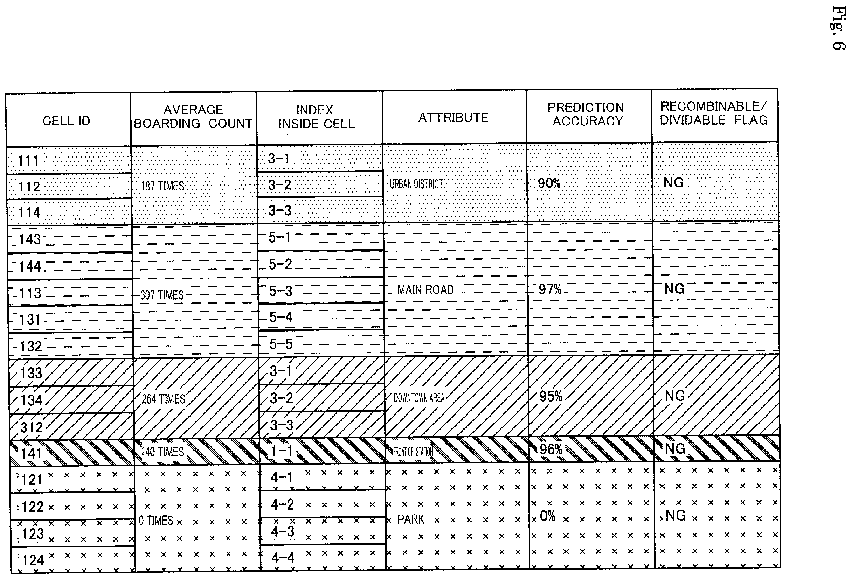

   Fig. 6 is a diagram illustrating an example of a cell list generated in a cell combination process associated with a third past demand prediction performed in the initial state.
[Fig. 7]

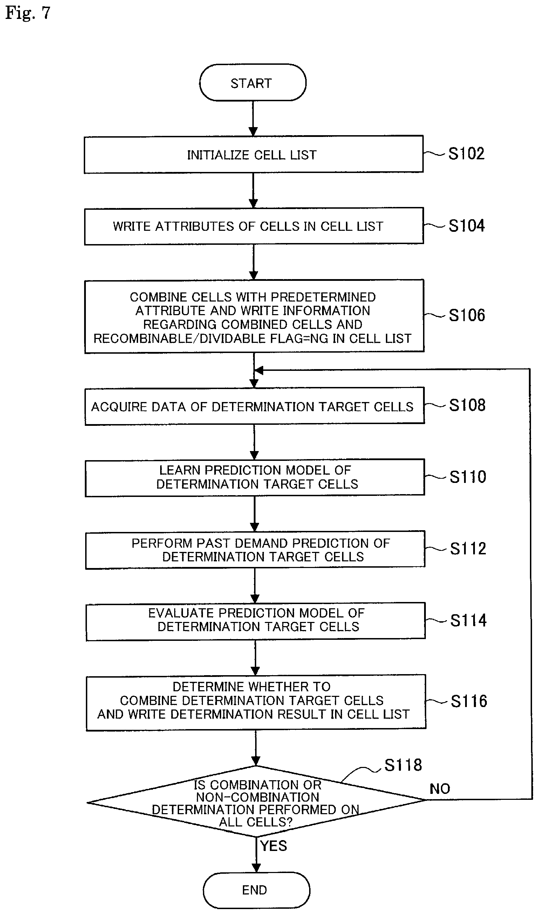

   Fig. 7 is a flowchart illustrating an example of a flow of a cell combination process associated with the first past demand prediction performed in the initial state by the demand prediction device according to the embodiment.
[Fig. 8]

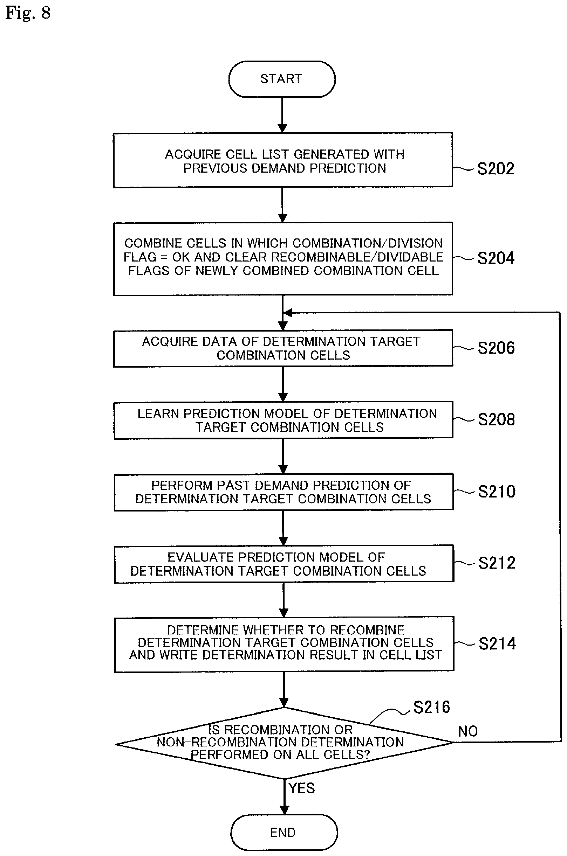

   Fig. 8 is a flowchart illustrating an example of a flow of a cell combination process associated with the past demand prediction after it is performed a second time in the initial state by the demand prediction device according to the embodiment.
[Fig. 9]

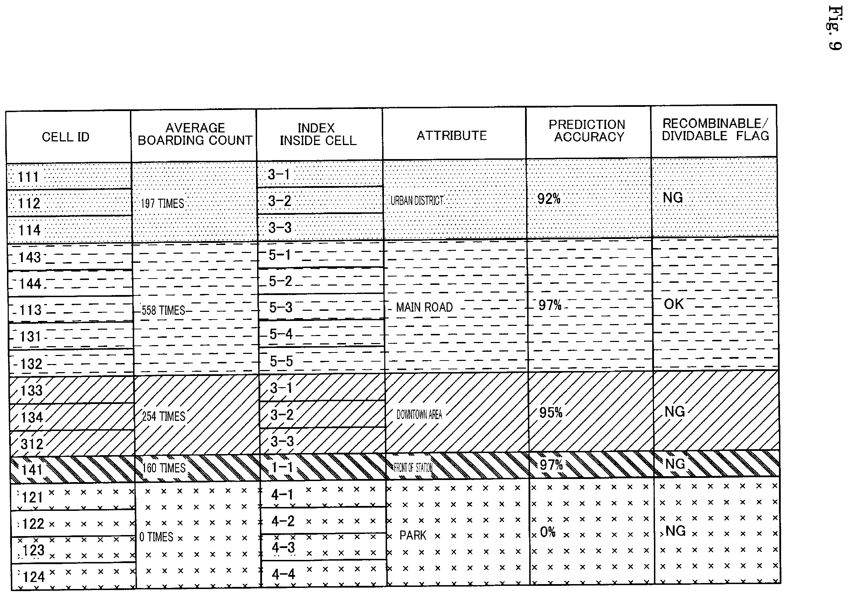

   Fig. 9 is a diagram illustrating an example of a cell list generated in the cell combination process associated with X-th demand prediction.
[Fig. 10]

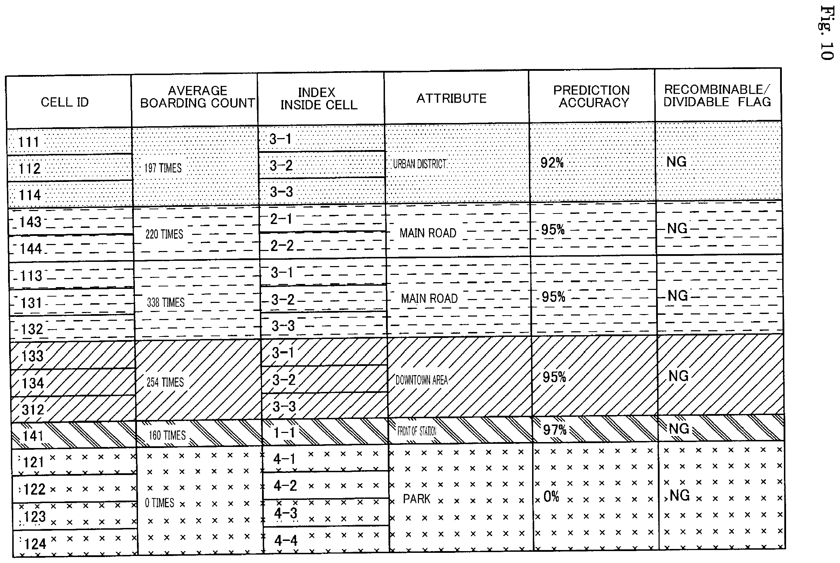

   Fig. 10 is a diagram illustrating an example of a cell list generated in the cell division process associated with the X-th demand prediction.
[Fig. 11]

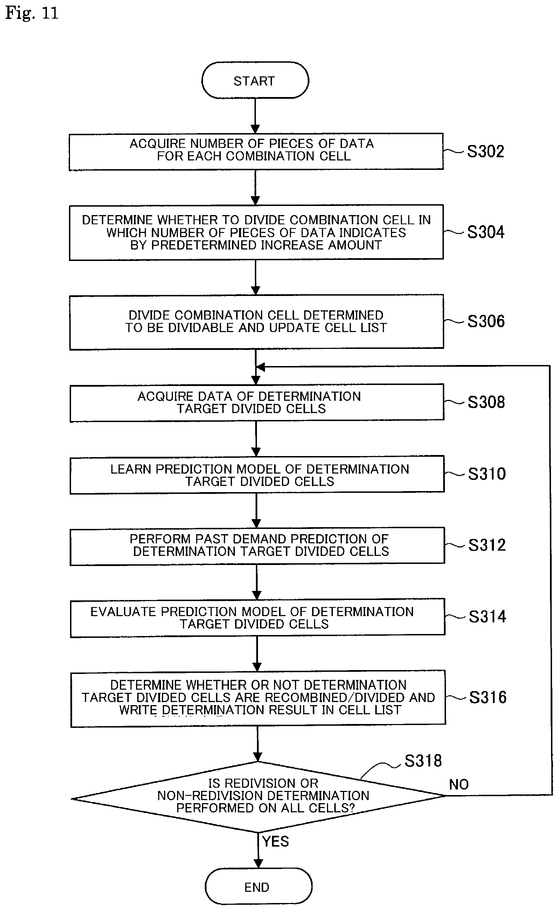

   Fig. 11 is a flowchart illustrating an example of a flow of a cell division process associated with the X-th demand prediction performed by the demand prediction device according to the embodiment.
[Fig. 12]

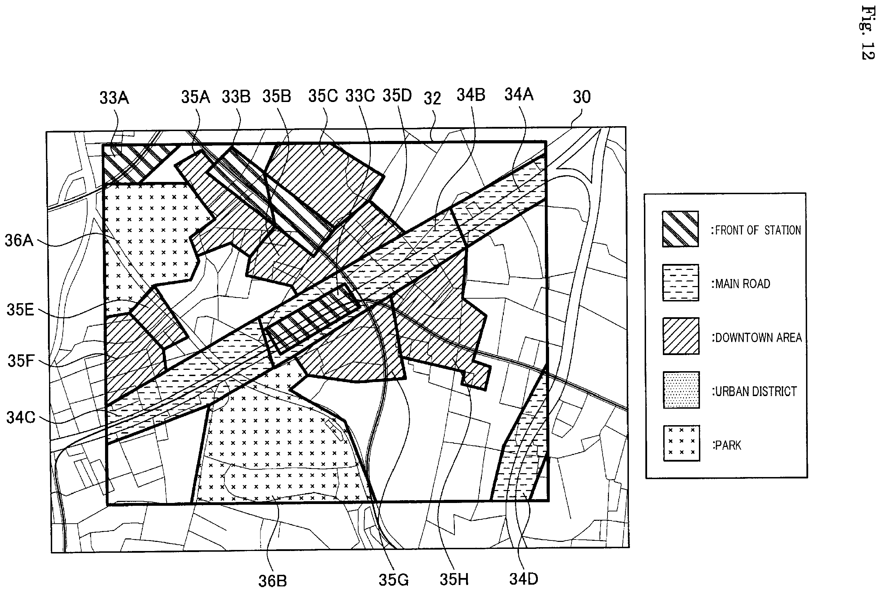

   Fig. 12 is a diagram illustrating an example of setting based on map information of a unit cell according to the embodiment.
[Fig. 13]

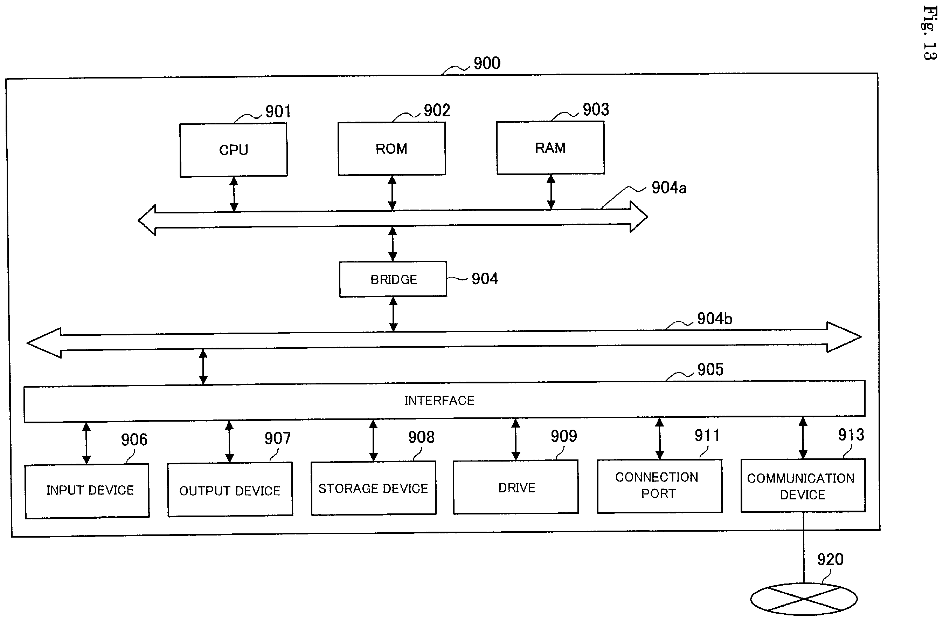

   Fig. 13 is a block diagram illustrating an example of a hardware configuration of an information processing device according to the embodiment.

### [Description of Embodiments]

Hereinafter, preferred embodiments of the present disclosure will be described with reference to the figures. In the present specification and the figures, the same reference numerals are given to constituent elements that have substantially the same functional configurations and description thereof will be omitted.

The description will be made in the following order.
1. Overview
1.1. System configuration
1.2. Overview of proposed technology
2. Functional configuration example
3. Cell combination and division
3.1. Cell combination
3.2. Cell division
3.3. Supplement
4. Hardware configuration example
5. Conclusion

### <<1. Overview>>

### <1.1. System configuration>

Fig. 1 is a diagram illustrating an example of a configuration of a moving body control system according to an embodiment of the present disclosure. As illustrated in Fig. 1, a moving body control system 1 according to the embodiment transmits and receives information between one or more moving bodies 2 and controls the moving bodies 2.

### (1) Moving body 2

The moving body 2 voluntarily moves in an actual space such as the land, the sky, on the water, underwater, or in outer space. For example, the moving body 2 can be realized as a vehicle such as a truck, a bus, or a taxi, a flying vehicle such as an airplane or a drone, a ship, a submarine, or an artificial satellite. The moving body 2 can convey any conveyance object loaded thereon. A human being, an animal, freight, or the like can be exemplified as the conveyance object. In the present specification, a use case of vehicle dispatch in which the moving body 2 is a taxi and the conveyance object is a passenger (a human being) will be described.

As illustrated in Fig. 1, the moving body 2 includes a log generation device 21 and a terminal device 22.

### • Log generation device 21

The log generation device 21 detects information regarding conveyance of a conveyance object by the taxi 2. For example, the log generation device 21 detects positional information of the taxi 2 in a horizontal direction based on a GNSS signal from a GNSS satellite 3. Further, the log generation device 21 may detect positional information such as barometric information in a height direction. In addition, the log generation device 21 may detect information regarding movement of the taxi 2 such as a speed, an acceleration, and an angular velocity. The log generation device 21 may detect information regarding a conveyance object such as the number of passengers, sexes, ages, and biological information of the passengers.

The log generation device 21 generates log data of a vehicle moving status based on the detected information and transmits the log data of the vehicle moving status to the data collection device 11. The log generation device 21 periodically performs the detection of the information regarding conveyance and the generation and transmission of the log data of the vehicle moving status. The period is, for example, a 1-minute unit. An example of a format of the log data of the vehicle moving status is shown in Table 1.
[Table 1]

**Table 1. Format of log data of vehicle moving status**

| Item name | Content |
|---|---|
| CompanyID | Company ID |
| RadioNumber | Radio number |
| IsDispatch | Dispatch flag |
| Latitude | Location (latitude) |
| Longitude | Location (longitude) |
| Direction | Traveling direction |
| SpeedFrom | Speed range (start) |
| SpeedTo | Speed range (arrival) |
| VehicleStatus | Vehicle status (occupied taxi, empty taxi, pickup taxi) |
| DriverNumber | Driver code |
| StatusTime | Status date and time |

Here, "CompanyID" is identification information of a taxi company that administrates the taxi 2. "RadioNumber" is radio identification information used by the taxi 2. "IsDispatch" is information indicating whether the taxi 2 can receive a dispatch instruction from the moving body control system 1. "Latitude" and "Longitude" are positional information of the taxi 2 in horizontal directions. The log data of the vehicle moving status may further include positional information of the taxi 2 in the height direction. "Direction" is information indicating a direction in which the taxi 2 is traveling. "SpeedFrom" is information indicating a lower limit of a speed of the taxi 2. "SpeedTo" is information indicating an upper limit of the speed of the taxi 2. "VehicleStatus" is information indicating a vehicle status. An occupied taxi indicates a status in which a passenger is aboard, an empty taxi indicates a status in which no passenger is aboard, and a pickup taxi indicates a status in which the taxi is going to pick up a passenger. "DriverNumber" is identification information of a driver who drives the taxi 2. "StatusTime" is information indicating a time corresponding to the log data of the vehicle moving status and is typically information indicating a time at which the log data of the vehicle moving status is generated.

### • Terminal device 22

The terminal device 22 is an information processing device that outputs information received from a vehicle dispatch device 13. For example, the terminal device 22 is realized by a car navigation device, a smartphone, or a tablet terminal and outputs information visually. A driver of the taxi 2 drives the taxi 2 to pick up a passenger based on the information output by the terminal device 22.

### (2) Moving body control system 1

As illustrated in Fig. 1, the moving body control system 1 includes a data collection device 11, a demand prediction device 12, and the vehicle dispatch device 13.

### • Data collection device 11

The data collection device 11 is an information processing device that collects data regarding the taxi 2. The data collection device 11 collects and accumulates the log data of the vehicle moving status from the plurality of taxis 2 which are control targets of the moving body control system 1.

The data collection device 11 aggregates the log data of the vehicle moving status collected for a predetermined period (hereinafter also referred to as an aggregation period) for each prediction target space. The data collection device 11 generates demand data of the taxi 2 for each prediction target space for the aggregation period in accordance with the aggregation. The demand data is data regarding a demand amount of a conveyance object. The demand data of the taxi 2 is data of the number of taxis 2, the number of passengers, a boarding count for each time, or a statistical amount such as an average value. For example, the data collection device 11 aggregates the number of taxis 2 in the prediction target space within the aggregation period as the demand data.

The prediction target space is a space which is a target of demand prediction by the demand prediction device 12. The prediction target space can be defined with geographical positional information (that is, positional information in the horizontal directions). For example, the occupied space is partitioned in a net shape of 125 m in the horizontal directions and each rectangle of 125 m in every direction is treated as a prediction target space. The prediction target space may be defined with the positional information in the height direction in addition to the geographical positional information. For example, the occupied space may be partitioned into cubes each with one side of 125 m and each cube may be treated as the prediction target space. Hereinafter, the prediction target space is also referred to as a cell. The shape of the cell is not limited to a square and any shape and size of the cell may be set.

The cell can be combined or divided, as will be described below. The cell in a minimum unit is also referred to as a unit cell below. A cell in which one or more unit cells are combined is also referred to as a combined cell below. When it is not particularly necessary to distinguish the unit cell and the combined cell from each other, the unit cell and the combined cell are generically referred to as a cell.

The data collection device 11 generates the demand data based on a collection result and transmits the demand data to the demand prediction device 12. An example of a format of the demand data is shown in Table 2. In Table 2, the aggregation period is 10 minutes.
[Table 2]

**Table 2. Format of demand data**

| Item name | Content |
|---|---|
| Timestamp | Time |
| Cell id | Cell ID |
| Ride count | Number (total number of taxis in cell for 10 minutes from that time) |

Here, "Timestamp" is time information at the start or end of the aggregation period or during the aggregation period. "Cell id" is identification information of a cell. "Ride count" is the number of taxis 2 in a cell within an aggregation period (for example, 10 minutes).

### • Demand prediction device 12

The demand prediction device 12 is an information processing device that predicts a demand for the taxis 2 of each prediction target space based on input information. The demand prediction device 12 also learns a prediction model used for prediction.

The demand prediction device 12 predicts a demand for the taxis 2 of each cell at a certain time in the future (hereinafter also referred to as a prediction target time) based on past demand data generated by the data collection device 11. The predicted demand for the taxis 2 may be, for example, the number of taxis 2 which will be in the cell at the prediction target time, the number of passengers during a predetermined period from the prediction target time, or the boarding count during the predetermined period from the prediction target time. Further, the demand prediction device 12 may predict the demand for the taxis 2 of each cell based on external data. The external data is data such as weather information, train delay information, or traffic accident information which can have an influence on a demand for the taxis 2.

The demand prediction device 12 generates demand prediction data indicating a prediction result and transmits the demand prediction data to the vehicle dispatch device 13. An example of a format of the demand prediction data is shown in Table 3. In Table 3, the prediction target time is 30 minutes later.
[Table 3]

**Table 3. Demand prediction data**

| Item name | Content |
|---|---|
| Timestamp | Time |
| Cell id | Cell ID |
| Ride count | Number (predicted number of taxis in cell after 30 minutes) |

### • Vehicle dispatch device 13

The vehicle dispatch device 13 is information processing device that performs dispatch of the taxi 2 based on the demand prediction data.

The vehicle dispatch device 13 can transmit a dispatch instruction to each taxi 2 so that the number of taxis 2 satisfying a demand for each cell at the prediction target time is supplied based on the demand prediction data for each cell and positional information of each taxi 2. For example, the vehicle dispatch device 13 instructs the number of taxis 2 equal to or greater than the demand of the cell at the prediction target time to move to that cell among the taxis 2 located nearby the cell. The dispatch instruction includes, for example, a cell ID and the prediction target time of the cell of a destination.

The vehicle dispatch device 13 may transmit the demand prediction data for each cell to the taxis 2. In this case, a driver of each taxi 2 selects the destination.

### <1.2. Overview of proposed technology>

It is assumed that a smaller cell results in a deficient amount of demand data for each cell and insufficient learning, and thus there is concern of a cell with low prediction accuracy arising. On the other hand, a larger cell results in a larger amount of demand data for each cell. Therefore, learning is sufficiently performed and high prediction accuracy can be achieved.

Accordingly, the demand prediction device 12 combines a cell with low prediction accuracy with another cell. Accordingly, since the number of pieces of data in the cell after the combination increases to more than that before the combination, the prediction accuracy can be improved. On the other hand, the demand prediction device 12 divides a cell with considerably high prediction accuracy into a plurality of smaller cells. Accordingly, since the cell after the division is smaller than the cell before the division, a place in which a demand is predicted to arise can be specified in more detail. In this way, the demand prediction device 12 can set a cell in which sufficiently high prediction accuracy can be realized and a place in which a demand is predicted to arise can be specified in detail.

A demand for taxis considerably differs even in mutually adjacent cells in some cases. For example, a demand for taxis considerably differs according to whether a cell is a cell including a region facing a roundabout of a station or one adjacent cell. Accordingly, the demand prediction device 12 learns a prediction model for each cell and predicts a demand for each cell using the prediction model for each cell. Thus, it is possible to achieve high prediction accuracy in any cell.

### «2. Functional configuration example»

Fig. 2 is a block diagram illustrating an example of a functional configuration of the demand prediction device 12 according to the embodiment. As illustrated in Fig. 2, the demand prediction device 12 includes a data accumulation unit 121, an acquisition unit 122, a learning unit 123, a prediction unit 124, an evaluation unit 125, a determination unit 126, and an output unit 127.

### (1) Data accumulation unit 121

The data accumulation unit 121 has a function of accumulating various kinds of data for demand prediction. As examples of the data, the above-described demand data and external data can be exemplified.

Further, the data accumulation unit 121 accumulates information indicating an attribute of a cell (hereinafter also referred to as attribute data). The attribute of the cell is information indicating a topography, a purpose of an occupied space, or a type of building located inside and is set based on map information in which the information is retained in association with the positional information. As the attribute of the cell, for example, an urban district, a main road, a downtown area, the front of a station, a park, a river, a sea, or a facility can be exemplified. The attribute of a cell which is an urban district, a main road, a downtown area, or the front of a station means that the area of the urban district, the main road, the downtown area, or the front of the station occupying the cell is dominant. Similarly, the attribute of a cell which is a park, a river, a sea, or a facility means that the area of the park, the river, the sea, or the facility occupying the cell is dominant. In the cell that has a park, a river, a sea, or a facility as an attribute, it is not assumed that the taxi 2 picks up a passenger and a demand for the taxi 2 does not normally arise.

The data accumulation unit 121 outputs various types of accumulated data to the acquisition unit 122.

### (2) Acquisition unit 122

The acquisition unit 122 has a function of acquiring various kinds of data for demand prediction from the data accumulation unit 121. The acquisition unit 122 acquires data for demand prediction in each cell determined by the determination unit 126. For example, when the determination unit 126 combines a plurality of cells, data of a cell after combination is acquired by combining pieces of data of the plurality of combined cells. At this time, for example, the acquisition unit 122 unites attribute data by performing statistical processing such as adding of the demand data of the plurality of combined cells and averaging of the external data.

The acquisition unit 122 outputs the acquired data to the learning unit 123, the prediction unit 124, and the determination unit 126.

### (3) Learning unit 123

The learning unit 123 has a function of learning a prediction model for demand prediction. Specifically, the learning unit 123 learns parameters of the prediction model for demand prediction in each cell determined by the determination unit 126 based on data accumulated by the data accumulation unit 121. The prediction model is a model for predicting the demand data for each cell and is used by the prediction unit 124. The learning unit 123 outputs the parameters obtained through the learning to the prediction unit 124.

### (4) Prediction unit 124

The prediction unit 124 has a function of performing demand prediction for each cell. Specifically, the prediction unit 124 predicts demand data of the taxi 2 at the prediction target time in each cell determined by the determination unit 126 based on the data accumulated by the data accumulation unit 121. In the prediction, a prediction model to which the parameters learned by the learning unit 123 are applied is used. As the prediction model, any model, for example, a neural network such as a multilayer perceptron (MLP) or a decision tree such as eXtreme Gradient Boosting (XGBoost), can be used.

The prediction unit 124 outputs information indicating a prediction result to the evaluation unit 125.

### (5) Evaluation unit 125

The evaluation unit 125 has a function of evaluating prediction accuracy of the demand prediction for each cell. Specifically, the evaluation unit 125 compares a prediction result from the prediction unit 124 with an actual demand and calculates prediction accuracy. For example, the evaluation unit 125 compares the number of taxis 2 at the prediction target time included in the demand prediction result with the number of taxis 2 included in the demand data actually acquired at the prediction target time and calculates the degree of agreement as the prediction accuracy. The evaluation unit 125 may calculate a statistical amount such as an average value of comparison results at the plurality of prediction target times as the prediction accuracy.

The evaluation unit 125 may count the number of pieces of data for each cell and set the number of pieces of demand data as the prediction accuracy. The number of pieces of demand data may be the amount of accumulated demand data, the number of demands in the accumulated demand data (for example, the number of taxis 2, the number of passengers, or a boarding count), or a statistical amount such as a total value or an average value.

The evaluation unit 125 outputs information indicating the calculated prediction precision and information indicating the prediction result from the prediction unit 124 to the determination unit 126 and the output unit 127 in association.

### (6) Determination unit 126

The determination unit 126 has a function of determining a cell. Specifically, the determination unit 126 determines whether to combine or divide a cell based on the prediction accuracy of the prediction model for each cell. The determination unit 126 combines the cell determined to be combined with another cell. The determination unit 126 divides the cell determined to be divided into a plurality of cells. In this way, the shape and size of each cell are determined.

The determination unit 126 outputs information indicating a determination result to each of the acquisition unit 122 and the learning unit 123.

### (7) Output unit 127

The output unit 127 has a function of outputting a prediction result through the demand prediction device 12. For example, the output unit 127 outputs the prediction result of a demand for each cell from the prediction unit 124 and an evaluation result of the prediction model for each cell from the evaluation unit 125 in association.

### «3. Cell combination and division»

### <3.1. Cell combination>

The determination unit 126 determines a cell with the prediction accuracy lower than a first threshold as a combination target. Being lower than the first threshold may mean being equal to or less than the first threshold or may mean being less than the first threshold. The number of pieces of data in the cell after combination is a sum of the number of pieces of data in each cell before combination. Accordingly, since the number of pieces of data increases with the combination, it is possible to improve the prediction accuracy.

In other words, the determination unit 126 may determine a cell in which the number of pieces of demand data satisfies a predetermined reference as a combination target. For example, the determination unit 126 determines a cell in which the number of pieces of data is less than a predetermined threshold as a combination target. Thus, it is possible to obtain similar advantageous effects to those of a case in which the combination target is determined based on the prediction accuracy.

The determination unit 126 combines another cell satisfying a predetermined combination reference in a relation with a combination target cell with the combination target cell. Conversely, when there is no other cell satisfying the predetermined reference, the determination unit 126 excludes the combination target cell from combination targets. Hereinafter, an example of the combination reference will be described.

### • Example of combination reference

The determination unit 126 may combine combination target cells. Thus, cells which have low prediction accuracy and smaller numbers of pieces of data are combined. Since the number of pieces of data of the combined cell after combination is a sum of the number of pieces of data of each cell before combination, an improvement in the prediction accuracy is expected. Accordingly, it is possible to efficiently improve the prediction accuracy of the cell.

The determination unit 126 may combine a combination target cell with another cell that has an attribute corresponding to an attribute of the combination target cell. The attribute corresponding to the attribute of the combination target cell is an attribute identical or similar to the attribute of the combination target cell. The similar attribute is an attribute that tends to have similar demand data. For example, a river and a sea are similar attributes in that a taxi 2 is similarly not assumed to pick up a passenger (that is, a demand is normally 0). Since cells that have corresponding attributes tend to have similar demand data, it is possible to suppress a variation in the prediction accuracy for each position inside the combined cell.

The determination unit 126 combines a combination target cell with another cell adjacent to the combination target cell. Being adjacent means that at least parts of the boundaries of the cells are in contact. Since the demand data tends to be more similar in adjacent cells than in distant cells, it is possible to suppress a variation in the prediction accuracy at each position inside the combined cell.

The example of the combination reference has been described above. When the number of cells satisfying the combination reference is plural, the determination unit 126 combines cells at random or preferentially combines cells in which the degree of satisfaction of the combination reference is high.

### • Timing of cell combination

The determination unit 126 can determine whether to combine cells with each demand prediction. Specifically, the demand prediction device 12 performs the demand prediction and evaluation of prediction accuracy using the prediction model and determines whether to combine the cells based on an evaluation result. When the cells are determined to be combined, the demand prediction device 12 performs combination of the cells and learning of the prediction model in a new combined cell.

The demand prediction device 12 performs past demand prediction using the learned prediction model with regard to the new combined cell and performs evaluation of the prediction accuracy. The past demand prediction is prediction of a demand at a second time later than a first time based on the past demand data at the first time. The past demand prediction is typically performed to evaluate the prediction model after the combination/division of the cell. The data used to learn the prediction model typically differs from the data used for past demand prediction. The demand prediction device 12 may perform recombination and may perform the combination again and past demand prediction and evaluation of the prediction model in the new combined cell until a desired evaluation result such as an improvement in the prediction accuracy is obtained. Thereafter, the demand prediction device 12 performs the demand prediction using the newly learned prediction model with regard to the new combined cell.

In an initial state in which the demand prediction has not yet been performed, the demand prediction device 12 performs the past demand prediction and performs the cell combination. When the cells to be combined are all combined, the demand prediction device 12 ends the past demand prediction and the cell combination. Thereafter, the demand prediction device 12 performs the demand prediction using the combined cell.

### • Specific example

Hereinafter, a specific example of a cell combination process associated with the past demand prediction performed in the initial state will be described with reference to Figs. 3 to 6. In the example illustrated in Figs. 3 to 6, the demand prediction device 12 determines to combine cells while updating the cell list.

The cell list is a list in which information regarding combination/division of cells is associated for each cell.

Fig. 3 is a diagram illustrating an example of setting of a unit cell according to the embodiment. Fig. 3 illustrates an aspect in which information 31 indicating a unit cell set within a predetermined range is superimposed on the map 30. In the example illustrated in Fig. 3, an occupied space is partitioned in a net shape in the horizontal directions and each rectangle is treated as a unit cell. An attribute of a cell is one of the front of a station, a main road, a downtown area, an urban district, or a park and different hatching is assigned to each attribute of the cell. A number in each cell is a cell ID.

Fig. 4 is a diagram illustrating an example of a cell list generated in a cell combination process associated with a first past demand prediction performed in the initial state. In Fig. 4, a cell ID, an average boarding count, an index inside a cell, an attribute, prediction accuracy, and a recombinable/dividable flag are associated for each cell in the cell list. The average boarding count is an average value of a boarding count during an aggregation period for each cell and is equivalent to the number of pieces of data. The index inside the cell is identification information for identifying each unit cell included in the cell. Specifically, the index inside the cell is information in which a total number of unit cells included in the cell and an index of the unit cell are connected by "-." The recombinable/dividable flag is a flag indicting whether a cell is a recombination and division target, OK indicates that the cell is a recombination and division target, and NG indicates that the cell is not a recombination and division target.

First, the determination unit 126 maps the attributes of the cells to the cell list. Subsequently, as illustrated in Fig. 4, the determination unit 126 combines a cell of which the attribute is a park, allocates a combined cell ID to each of the cells before combination, and sets the recombinable/dividable flag to NG. This is because a demand for the taxi 2 does not arise in the park. Subsequently, the prediction unit 124 performs the past demand prediction for each cell (each combined cell with regard to the combined cell). Then, the evaluation unit 125 evaluates the prediction result from the prediction unit 124 and writes the prediction accuracy in the cell list.

When the first threshold is assumed to be 95%, the determination unit 126 sets the recombinable/dividable flag to NG in the cell in which the prediction accuracy is equal to or greater than 95%. Conversely, the determination unit 126 sets the recombinable/dividable flag to OK in the cell in which the prediction accuracy is less than 95%. As illustrated in Fig. 4, the determination unit 126 allocates NG as the recombinable/dividable flag to the unit cell with a cell ID of 141 and the prediction accuracy of 96% and a combined cell in which the unit cells with cell IDs of 121 to 124 and the attribute of the park are combined, and allocates OK to the other cells.

With this, the cell combination process associated with the first past demand prediction ends. Next, a cell combination process associated with a second past demand prediction will be described with reference to Fig. 5.

Fig. 5 is a diagram illustrating an example of a cell list generated in a cell combination process associated with the second past demand prediction performed in the initial state. First, the determination unit 126 combines the cells which are adjacent to each other, have the same attributes, and have the recombinable/dividable flag of OK in the cell list illustrated in Fig. 4. For example, as illustrated in Fig. 5, the determination unit 126 combines the unit cells in which the cell IDs are 111, 112, and 114, combines the unit cells in which the cell IDs are 143 and 144, combines the unit cells in which the cell IDs are 113, 131, and 132, and combines the unit cells in which the cell IDs are 133, 134, and 312. Subsequently, the prediction unit 124 performs the past demand prediction for each of the new combined cells. Then, the evaluation unit 125 evaluates the prediction result from the prediction unit 124 and writes the prediction accuracy in the cell list.

When the first threshold is assumed to be 95%, the determination unit 126 sets the recombinable/dividable flag to NG in the combined cell in which the prediction accuracy is equal to or greater than 95% among the new combined cells. On the other hand, the determination unit 126 sets the recombinable/dividable flag to OK in the combined cell in which the prediction accuracy is less than 95% among the new combined cells. As illustrated in Fig. 5, the determination unit 126 allocates NG as the recombinable/dividable flag to the combined cell with the prediction accuracy of 95% in which the unit cells with the cell IDs of 131, 134, and 312 are combined. Further, the determination unit 126 allocates OK as the recombinable/dividable flag to the combined cells with the prediction accuracy of 68% in which the unit cells with the cell IDs of 143 and 144 are combined and the combined cell with the prediction accuracy of 89% in which the unit cells with the cell IDs of 113, 131, and 132 are combined. On the other hand, the determination unit 126 allocates NG as the recombinable/dividable flag to the combined cell with the prediction accuracy of 90%, no other adjacent cells in which the unit cells with the cell IDs of 111, 112, and 114 are combined.

With this, the cell combination process associated with the second past demand prediction ends. Next, a cell combination process associated with a third past demand prediction will be described with reference to Fig. 6.

Fig. 6 is a diagram illustrating an example of a cell list generated in a cell combination process associated with the third past demand prediction performed in the initial state. First, the determination unit 126 combines the cells which are adjacent to each other, have the same attributes, and have the recombinable/dividable flag of OK in the cell list illustrated in Fig. 5. For example, as illustrated in Fig. 6, the determination unit 126 combines the unit cells in which the cell IDs are 143, 144, 113, 131, and 132. Subsequently, the prediction unit 124 performs the past demand prediction for each cell. Then, the evaluation unit 125 evaluates the prediction result from the prediction unit 124 and writes the prediction accuracy in the cell list.

When the first threshold is assumed to be 95%, the determination unit 126 sets the recombinable/dividable flag to NG in the combined cell in which the prediction accuracy is equal to or greater than 95% among the new combined cells. On the other hand, the determination unit 126 sets the recombinable/dividable flag to OK in the combined cell in which the prediction accuracy is less than 95% among the new combined cells. As illustrated in Fig. 5, the determination unit 126 allocates NG as the recombinable/dividable flag to the combined cell in which the unit cells with the prediction accuracy of 97% and the cell IDs of 143, 144, 113, 131, and 132 are combined.

According to the cell list illustrated in Fig. 6, the recombinable/dividable flag is set to NG in all the cells, and then the demand prediction device 12 ends the past demand prediction and the cell combination process in the initial state.

### • Flow of process

Hereinafter, an example of a flow of the cell combination process associated with the past demand prediction performed in the initial state will be described with reference to Figs. 7 and 8.

Fig. 7 is a flowchart illustrating an example of a flow of a cell combination process associated with the first past demand prediction performed in the initial state by the demand prediction device 12 according to the embodiment. As illustrated in Fig. 7, the determination unit 126 first initializes the cell list (step S102). Subsequently, the determination unit 126 writes the attribute in the cell list (step S104). Subsequently, the determination unit 126 combines the cells with a predetermined attribute and writes information regarding the combined cell and the recombinable/dividable flag = NG in the cell list (step S106). An example of the predetermined attribute is an attribute such as a park for which a demand for the taxi 2 is assumed not to arise.

Thereafter, the demand prediction device 12 performs a process to be described below by setting cells in which the recombinable/dividable flag is empty as cells of combination or non-combination determination targets. The acquisition unit 122 first acquires data (demand data, external data, and attribute data) of the determination target cells (step S108). Subsequently, the learning unit 123 learns the prediction model of the determination target cells (step S110). Subsequently, the prediction unit 124 performs the past demand prediction of the determination target cells (step S112). Subsequently, the evaluation unit 125 evaluates the prediction model of the determination target cells (step S114). Then, the determination unit 126 determines whether to combine the determination target cells based on the evaluation result in step S114 and writes a determination result in the cell list (step S116). Subsequently, the determination unit 126 determines whether to combine all the cells (step S118). The determination can be performed depending on whether the recombinable/dividable flag of the cell list is set to OK or NG. When it is determined that an undetermined cell remains (step S 118/NO), the process returns to step S108 and the processes of step S108 and the subsequent steps are performed with the undetermined cell set as a determination target cell. Conversely, when the combination or non-recombination is determined to have been performed on all the cells (step S 118/YES), the process ends.

Fig. 8 is a flowchart illustrating an example of a flow of a cell combination process associated with the past demand prediction after it is performed the second time in the initial state by the demand prediction device 12 according to the embodiment. As illustrated in Fig. 8, the determination unit 126 first acquires the cell list generated in association with the previous past demand prediction (step S202). Subsequently, the determination unit 126 combines the cells with the recombinable/dividable flag = OK and clears the recombinable/dividable flag of the newly combined combined cell (step S204).

Thereafter, the demand prediction device 12 performs a process to be described below by setting combined cells in which the recombinable/dividable flag is empty as cells of recombination or non-combination determination targets. The acquisition unit 122 first acquires data (demand data, external data, and attribute data) of the determination target combined cells (step S206). For example, the acquisition unit 122 acquires and integrates the data of the unit cells included in the determination target combined cells. Subsequently, the learning unit 123 learns the prediction model of the determination target combined cells (step S208). Subsequently, the prediction unit 124 performs the past demand prediction of the determination target combined cells (step S210). Subsequently, the evaluation unit 125 evaluates the prediction model of the determination target combined cells (step S212). Then, the determination unit 126 determines whether to recombine the determination target combined cells based on the evaluation result in step S212 and writes the determination result in the cell list (step S214). Subsequently, the determination unit 126 determines whether to recombine all the combined cells (step S216). The determination can be performed depending on whether the recombinable/dividable flag of the cell list is set to OK or NG. When it is determined that an undetermined cell remains (step S216/NO), the process returns to step S206 and the processes of step S206 and the subsequent steps are performed with the undetermined combined cell set as a determination target cell. Conversely, when the recombination or non-recombination is determined to have been performed on all the combined cells (step S216/YES), the process ends.

### <3.2. Cell division>

The determination unit 126 determines the cells in which the prediction accuracy is higher than the second threshold as division targets. Being higher than the second threshold may mean being equal to or greater than the second threshold or may mean being greater than the first threshold. Here, the second threshold is a value which is the same as the first threshold or greater than the first threshold. Since the number of pieces of data of each cell after division is typically less than the number of pieces of data of the cell before division, the number of pieces of data can decrease to the degree that the prediction accuracy of the cell after division is higher. Since the cell after the division is smaller than the cell before division, a place in which a demand is predicted to arise can be specified in more detail.

In other word, the determination unit 126 may determine a cell in which the number of pieces of demand data satisfies a predetermined reference as a division target. For example, the determination unit 126 determines a cell satisfying a predetermined reference, such as the number of pieces of data exceeding a predetermined threshold, the number of pieces of data indicating a predetermined increase amount, or the number of pieces of data indicating a predetermined increase ratio, as a division target. Accordingly, it is possible to obtain similar advantageous effects as those of a case in which the division target is determined based on the prediction accuracy.

The determination unit 126 may set a combined cell as a division target. That is, a cell that has been combined once can be divided with an improvement in the prediction accuracy. In this way, granularity of the cells can be set to be fine with an improvement in the prediction accuracy.

The determination unit 126 may determine whether to divide a cell in accordance with an attribute of the cell. For example, the determination unit 126 determines that a cell which has an attribute such as a park, a river, a sea, or a facility in which the taxi 2 is not assumed to pick up a passenger and indicating that a demand for the taxi 2 does not arise is not divided. Since the demand does no arise in such a cell, the advantageous effect of generating the prediction model finely is negligible. By avoiding unnecessary division, it is possible to reduce a processing load on the learning of the prediction model.

The determination unit 126 may divide the cell so that the number of pieces of data after division satisfies a predetermined reference. For example, the determination unit 126 may divide the cell so that the number of pieces of demand data of each cell after division exceeds a predetermined threshold. Thus, it is possible to prevent the number of pieces of data of the cell after division from being dramatically reduced and present the prediction accuracy from being considerably lowered.

The determination unit 126 may determine the cell after division so that the unit cells included in the cell after the division are adjacent to each other when the cell after division is a combined cell. Since the adjacent cells tend to have more similar demand data than distant cells, it is possible to suppress a variation in the prediction accuracy for each position inside the cell after the division.

### • Timing of cell division

The determination unit 126 can determine whether to divide the cell at each demand prediction. Specifically, the demand prediction device 12 performs the demand prediction and evaluation of prediction accuracy using the prediction model and determines whether to divide the cell based on an evaluation result. When the cell is determined to be divided, the demand prediction device 12 performs division of the cell and learning of the prediction model in the divided cells.

The demand prediction device 12 performs past demand prediction using the learned prediction model with regard to the divided cells and performs evaluation of the prediction accuracy. The demand prediction device 12 may perform re-division and may perform learning of the prediction model and past demand prediction and evaluation of the prediction model in the divided cells until a desired evaluation result such as falling of a deterioration width of the prediction accuracy within a predetermined range in the prediction accuracy is obtained. Thereafter, the demand prediction device 12 performs the demand prediction using the newly learned prediction model with regard to the divided cells.

### • Specific example

Hereinafter, a specific example of the cell division process associated with the demand prediction will be described with reference to Figs. 9 and 10. In the example illustrated in Figs. 9 and 10, the demand prediction device 12 determines to divide the cell while updating the cell list.

Fig. 9 is a diagram illustrating an example of a cell list generated in the cell combination process associated with X-th demand prediction. Fig. 9 illustrates the cell list generated at the time of the X-th demand prediction after the cells are combined, as described with reference to Figs. 3 to 6. X is an integer equal to or greater than 1. The prediction unit 124 performs the X-th demand prediction for each cell (each combined cell with regard to the combined cell). Then, the evaluation unit 125 evaluates the prediction result from the prediction unit 124 and writes the prediction accuracy in the cell list.

The determination unit 126 can determine the combined cell attempted to be divided based on the number of pieces of demand data for each combined cell. For example, the determination unit 126 attempts to divide the combined cell satisfying a predetermined reference, such as the number of pieces of data exceeding a predetermined threshold, the number of pieces of data indicating a predetermined increase amount, or the number of pieces of data indicating a predetermined increase ratio. In the example illustrated in Fig. 9, it is assumed that the number of pieces of data of a combined cell in which the unit cells with the cell IDs of 143, 144, 113, 131, and 132 are combined indicates a predetermined increase amount and the combined cell is determined as a combined cell attempted to be divided.

The determination unit 126 determines whether to divide the combined cell attempted to be divided. Specifically, when the second threshold is assumed to be 95%, the determination unit 126 sets the recombinable/dividable flag to OK in the combined cell in which the prediction accuracy is greater than 95% among the combined cells attempted to be divided. On the other hand, the determination unit 126 sets the recombinable/dividable flag to NG in the combined cell in which the prediction accuracy is equal to or less than 95% among the combined cells attempted to be divided. As illustrated in Fig. 9, the determination unit 126 allocates OK as the recombinable/dividable flag to the combined cell with the prediction accuracy of 97% in which the unit cells with the cell IDs of 143, 144, 113, 131, and 132 are combined. On the other hand, since the prediction accuracy is equal to or less than 95% in all the other combined cells, the determination unit 126 allocates NG as the recombinable/dividable flag.

Thereafter, the determination unit 126 actually divides the cell and determines whether to re-divide the cell after the division. This point will be described with reference to Fig. 10.

Fig. 10 is a diagram illustrating an example of a cell list generated in the cell division process associated with the X-th demand prediction. The determination unit 126 first divides the combined cell in which the recombinable/dividable flag is OK in the cell list illustrated in Fig. 9. For example, as illustrated in Fig. 10, the determination unit 126 divides the combined cell in which the units cells with the cell IDs of 143, 144, 113, 131, and 132 are combined into a combined cell in which the unit cells with the cell IDs of 143 and 144 are combined and a combined cell in which the unit cells with the cell IDs of 113, 131, and 132 are combined. Subsequently, the prediction unit 124 performs the past demand prediction for each of the cells after the division. Then, the evaluation unit 125 evaluates the prediction result from the prediction unit 124 and writes the prediction accuracy in the cell list.

When the second threshold is assumed to be 95%, the determination unit 126 sets the recombinable/dividable flag to OK in the cell in which the prediction accuracy is greater than 95% among the cells after division. On the other hand, the determination unit 126 sets the recombinable/dividable flag to NG in the combined cell in which the prediction accuracy is equal to or less than 95% among the cells after the division. As illustrated in Fig. 10, the determination unit 126 allocates NG as the recombinable/dividable flag to the combined cell with the prediction accuracy of 95% in which the unit cells with the cell IDs of 143 and 144 are combined and a combined cell in which the unit cells with the cell IDs of 113, 131, and 132 are combined.

According to the cell list illustrated in Fig. 10, the recombinable/dividable flag is set to NG in all the cells, and then the cell division process ends.

### • Flow of process

Hereinafter, an example of a flow of the cell division process associated with the X-th demand prediction will be described with reference to Fig. 11.

Fig. 11 is a flowchart illustrating an example of a flow of a cell division process associated with the X-th demand prediction performed by the demand prediction device 12 according to the embodiment. As illustrated in Fig. 11, the acquisition unit 122 first acquires the number of pieces of data for each combined cell (step S302). Here, the number of pieces of data is, for example, an average boarding count in the demand data. Subsequently, the determination unit 126 determines whether to divide the combined cell indicating the number of pieces of data indicates the predetermined increase amount (step S304). For example, the determination unit 126 determines the division or non-division based on the prediction accuracy of the combined cell in which the number of pieces of data indicates the predetermined increase amount. Subsequently, the determination unit 126 divides the combined cell determined to be dividable and updates the cell list (step S306).

Thereafter, the demand prediction device 12 performs a process to be described below by setting the cell after the division as a re-dividable determination target cell. The acquisition unit 122 first acquires data (demand data, external data, and attribute data) of the determination target divided cells (step S308). Specifically, the acquisition unit 122 acquires and integrates the data of the unit cells included in the determination target divided cells. Subsequently, the learning unit 123 learns the prediction model of the determination target divided cells (step S310). Subsequently, the prediction unit 124 performs the past demand prediction of the determination target divided cells (step S312). Subsequently, the evaluation unit 125 evaluates the prediction model of the determination target divided cells (step S314). Then, the determination unit 126 determines whether to re-divide the determination target divided cells based on the evaluation result in step S314 and writes the determination result in the cell list (step S316). Subsequently, the determination unit 126 determines whether to re-divide all the divided cells (step S318). The determination can be performed depending on whether the recombinable/dividable flag of the cell list is set to OK or NG. When it is determined that the undetermined divided cell remains (step S318/NO), the process returns to step S308 and the processes of step S308 and the subsequent steps are performed by setting the undetermined divided cell as a determination target cell. Conversely, when the re-division or non-re-division is determined to be performed on all the divided cells (step S318/YES), the process ends.

### <3.3. Supplement>

### • Updating timing of cell

The determination unit 126 may re-determine the combination or division of the cell in accordance over time. For example, when a predetermined time has passed, the determination unit 126 may perform the above-described cell combination process by setting the unit cells as targets and may subsequently perform the division process. Thus, it is possible to normally determine the cells suitable for a latest situation.

The determination unit 126 may re-determine the cell combination or division in response to a change in the attributes of the cells. The attributes of the cell can change depending on demolition of an existing building, construction of a new building, or an extension of a road. From this point, it is possible to determine the cells in accordance with the latest situation by updating the cells in response to the change in the attributes of the cells.

### • Cell generation method

As described above, the unit cell has the square shape formed by partitioning the occupied space in the net shape in the horizontal direction, but the present technology is not limited to this example. For example, the cells can be set based on the map information. An example will be described with reference to Fig. 12.

Fig. 12 is a diagram illustrating an example of setting based on the map information of the unit cell according to the embodiment. Fig. 12 illustrates an aspect in which information 32 indicating a unit cell set within a predetermined range is superimposed on the map 30. In the information 32 indicating the unit cell, cells 33A to 33C with an attribute of the front of a station are set along a space of the front of the station. Cells 34A to 34D with an attribute of a main road are set along the main road. Cells 35A to 35G with an attribute of a downtown area are set along the downtown area. Although not illustrated in Fig. 12, cells with an attribute of an urban district are set along the urban district. The unit cell is preferably set to be as small as possible so that the demand prediction is optimum in each unit cell (for example, the prediction accuracy is equal to or greater than the first threshold and equal to or less than the second threshold).

The unit cell may be set excluding an area such as a building in which the taxi 2 cannot travel. That is, the unit cell may be set in an area such as a road in which the taxi 2 can travel. Further, the unit cell may be set in each traveling direction on a road. Thus, since a demand is predicted for each road or in each extension direction, it is possible to specify a place in which the demand is predicted to arise in more detail.

### «4. Hardware configuration example»

Finally, a hardware configuration of the information processing device according to the embodiment will be described with reference to Fig. 13. Fig. 13 is a block diagram illustrating an example of a hardware configuration of the information processing device according to the embodiment. An information processing device 900 illustrated in Fig. 13 can function as, for example, the demand prediction device 12 illustrated in Fig. 2. Information processing by the demand prediction device 12 according to the embodiment is realized by cooperation of software and hardware to be described below.

As illustrated in Fig. 13, the information processing device 900 includes a central processing unit (CPU) 901, a read-only memory (ROM) 902, a random access memory (RAM) 903, and a host bus 904a. The information processing device 900 includes a bridge 904, an external bus 904b, an interface 905, an input device 906, an output device 907, a storage device 908, a drive 909, a connection port 911, and a communication device 913. The information processing device 900 may include a processing circuit such as an electric circuit, a DSP, or an ASIC instead of or in addition to the CPU 901.

The CPU 901 functions as an arithmetic processing device and a control device and controls general operations in the information processing device 900 in accordance with various programs. The CPU 901 may be a microprocessor. The ROM 902 stores programs, arithmetic parameters, and the like used by the CPU 901. The RAM 903 temporarily stores programs used in execution of the CPU 901 and parameters or the like appropriately changed in the execution. The CPU 901 can function as, for example, the acquisition unit 122, the learning unit 123, the prediction unit 124, the evaluation unit 125, the determination unit 126, and the output unit 127 illustrated in Fig. 2.

The CPU 901, the ROM 902, and the RAM 903 are connected to each other by a host bus 904a including a CPU bus. The host bus 904a is connected to an external bus 904b such as a peripheral component interconnect/interface (PCI) bus via the bridge 904. The host bus 904a, the bridge 904, and the external bus 904b are not necessarily be separated from each other and these functions may be mounted on one bus.

The input device 906 is realized by, for example, a device such as a mouse, a keyboard, a touch panel, a button, a microphone, a switch, and a lever to which information is input by a user. The input device 906 may be, for example, a remote control device using infrared light or other radio waves or may be an externally connected device such as a mobile phone or a PDA corresponding to an operation of the information processing device 900. Further, the input device 906 may include, for example, an input control circuit that generates an input signal based on information input by the user using the input means and outputs the input signal to the CPU 901. The user of the information processing device 900 operates the input device 906 to input various kinds of data to the information processing device 900 or give a processing operation instruction.

The output device 907 is formed by a device capable of notifying a user of acquired information visually or auditorily. As this device, there is a display device such as a CRT display device, a liquid crystal display device, a plasma display device, an EL display device, a laser projector, an LED projector, and a lamp, a sound output device such as a speaker and a headphone, or a printer device. The output device 907 outputs, for example, results obtained through various processes performed by the information processing device 900. Specifically, the display device displays the results obtained through various processes performed by the information processing device 900 in various forms such as text, images, tables, and graphs visually. On the other hand, the sound output device converts an audio signal formed by reproduced sound data or acoustic data into an analog signal and outputs the analog signal auditorily.

The storage device 908 is a data storage device formed as an example of a storage unit of the information processing device 900. The storage device 908 is realized by, for example, a magnetic storage device such as an HDD, a semiconductor storage device, an optical storage device, or a magneto-optical storage device. The storage device 908 may include a storage medium, a recording device that records data on the storage medium, a reading device that reads data from the storage device, and a deletion device that deletes data recorded on the storage medium. The storage device 908 stores various kinds of data and programs executed by the CPU 901 and various kinds of pieces of data acquired from the outside. The storage device 908 can function as, for example, the data accumulation unit 121 illustrated in Fig. 2.

The drive 909 is a storage medium reader or writer and is embedded or attached externally to the information processing device 900. The drive 909 reads information recorded on a mounted removable storage medium such as a magnetic disk, an optical disc, a magneto-optical disc, or a semiconductor memory and outputs the information to the RAM 903. The drive 909 can write information on the removable storage medium.

The connection port 911 is an interface connected to an external device and is, for example, a connection port to the external device capable of transmitting data through a universal serial bus (USB).

The communication device 913 is, for example, a communication interface formed by a communication device or the like and connected to the network 920. The communication device 913 is, for example, a communication card for a wired or wireless local aera network (LAN), a Long Term Evolution (LTE), Bluetooth (registered trademark), or wireless USB (WUSB). The communication device 913 may be a router for optical communication, a router for asymmetric digital subscriber line (ADSL), or a modem for various types of communication. For example, the communication device 913 can transmit and receive a signal or the like to and from the Internet or another communication device in conformity with a predetermined protocol such as TCP/IP. In the embodiment, the communication device 913 receives the demand data and external data and transmits the demand prediction data or a dispatch instruction to the terminal device 22.

The network 920 is a wired or wireless transmission path for information transmitted from a device connected to the network 920. For example, the network 920 may include a public line network such as the Internet, a telephone line network, or a satellite communication network, various local area networks (LAN) including Ethernet (registered trademark), and a wide area network (WAN). The network 920 may include a dedicated line network such as Internet protocol-virtual private network (IP-VPN).

The example of the hardware configuration capable of realizing the functions of the information processing device 900 according to the embodiment has been described above. The constituent elements may be realized using general-purpose members or may be realized by hardware specialized for the function of each constituent element. Accordingly, it is possible to appropriately change a hardware configuration to be used in accordance with a technical level when the embodiment is carried out.

It is possible to produce and mount a computer program for realizing each function of the information processing device 900 according to the above-described embodiment on a PC or the like. I it is possible to also provide a computer-readable recording medium in which the computer program is stored. The recording medium is, for example, a magnetic disk, an optical disc, a magneto-optical disc, or a flash memory. The computer program may be delivered via, for example, a network without using the recording medium.

### «5. Conclusion»

The embodiment of the present disclosure has been described above with reference to Figs. 1 to 13. As described above, the demand prediction device 12 according to the embodiment acquires the demand data for each cell of a moving body that conveys a conveyance object loaded onto the moving body and learns a prediction model for predicting a demand data for each cell. The demand prediction device 12 determines whether combine or divide the cell based on the prediction accuracy of the prediction model. For example, the demand prediction device 12 combines the cell with the considerably low prediction accuracy with another cell. Accordingly, since the number of pieces of data in the cell after the combination increases more than before the combination, the prediction accuracy can be improved. On the other hand, the demand prediction device 12 divides a cell with considerably high prediction accuracy into a plurality of smaller cells. Accordingly, since the cell after the division is smaller than the cell before the division, a place in which a demand is predicted to arise can be specified in more detail. In this way, the demand prediction device 12 can set a cell in which sufficiently high prediction accuracy can be realized and a place in which a demand is predicted to arise can be specified in detail. The demand prediction device 12 can achieve the high prediction accuracy in any cell by learning the prediction model for each cell.

For example, the demand prediction device 12 can predict demand occurrence of taxis with high accuracy in all the cells with regard to demand prediction of the taxis. Thus, since optimum taxi dispatch is realized, wasted strolling business time can be reduced and taxi productivity can be improved.

The preferred embodiment of the present disclosure has been described above in detail with reference to the appended figures, but the technical range of the present disclosure is not limited to the example. It is apparent to those skilled in the art in the technical field of the present disclosure that various changes or corrections can be made and these changes and corrections are, of course, construed to pertain to the technical scope of the present disclosure.

For example, in the foregoing embodiment, the use case of the taxi dispatch has been described, but an application of the present technology is not limited to the example. For example, the present technology may be used to set a traveling route of a share taxi or a bus in which a traveling route can be flexibly set. In this case, as in the example of the taxi dispatch, a demand for a share taxi or a bus is predicted and a traveling route is set so that a cell in which a demand is predicted to be great is preferentially passed. The present technology may be used to pick up a home-delivery object. In this case, as in the example of the taxi dispatch, a demand of a truck for pickup is predicted and a traveling route of the truck is set so that a cell in which a demand is predicted to be great is preferentially passed. The present technology may be used to select a parking lot. In this case, a vacant place of a parking lot is predicted for each cell and a dispatch instruction is notified of to move to a cell in which many vacant places are predicted.

The processes described with reference to the flowchart in the present specification may not necessarily be performed in the orders illustrating in the figures. Several processing steps may be performed in parallel. Additional processing steps may be adopted or some processing steps may be omitted.

The advantageous effects described in the present specification are merely explanatory or exemplary and are not limited. That is, in the technology according to the present disclosure, it is possible to achieve other advantageous effects apparent to those skilled in the art can be obtained from the description of the present specification in addition or instead of the foregoing advantageous effects.

The following configurations belong to the technical scope of the present disclosure.
(1) An information processing device including:
   an acquisition unit configured to acquire demand data for each prediction target space of a moving body that conveys a conveyance object loaded onto the moving body;
   a learning unit configured to learn a prediction model for predicting the demand data for each prediction target space; and
   a determination unit configured to determine whether to combine or divide the prediction target space based on prediction accuracy of the prediction model.
(2) The information processing device described in (1), in which the determination unit determines the prediction target space with the prediction accuracy lower than a first threshold as a combination target.
(3) The information processing device described in (2), in which the determination unit combines the prediction target spaces of the combination targets.
(4) The information processing device described in (2) or (3), in which the determination unit combines the prediction target space of the combination target with another prediction target space that has an attribute corresponding to an attribute of the prediction target space of the combination target.
(5) The information processing device described in any one of (2) to (4), in which the determination unit combines the prediction target space of the combination target with another prediction target space adjacent to the prediction target space of the combination target.
(6) The information processing device described in any one of (1) to (5), in which the determination unit determines the prediction target space with the prediction accuracy higher than a second threshold as a division target.
(7) The information processing device described in any one of (1) to (6), in which the determination unit determines the prediction target space in which the number of pieces of demand data satisfies a predetermined reference.
(8) The information processing device described in any one of (1) to (7), in which the determination unit determines division or non-division in accordance with an attribute of the prediction target space.
(9) The information processing device described in any one of (1) to (8), in which the determination unit re-determines the combination or division of the prediction target space over time.
(10) The information processing device described in any one of (1) to (9), in which the determination unit re-determines the combination or division of the prediction target place with a change in an attribute of the prediction target space.
(11) The information processing device described in any one of (1) to (10), in which the prediction target space is defined with positional information in a horizontal direction and positional information in a height direction.
(12) The information processing device described in any one of (1) to (11), in which the prediction target space is set based on map information.
(13) The information processing device described in any one of (1) to (12), in which the moving body is a vehicle and the demand data is data regarding a demand amount of the conveyance object.
(14) An information processing method performed by a processor, the method including:
   acquiring demand data for each prediction target space of a moving body that conveys a conveyance object loaded onto the moving body;
   learning a prediction model for predicting the demand data for each prediction target space; and
   determining whether to combine or divide the prediction target space based on prediction accuracy of the prediction model.
(15) A program causing a computer to function as:
   an acquisition unit configured to acquire demand data for each prediction target space of a moving body that conveys a conveyance object loaded onto the moving body;
   a learning unit configured to learn a prediction model for predicting the demand data for each prediction target space; and
   a determination unit configured to determine whether to combine or divide the prediction target space based on prediction accuracy of the prediction model.

### [Reference Signs List]

1 Moving body control system
2 Moving body, taxi
3 GNSS satellite
11 Data collection device
12 Demand prediction device
13 Vehicle dispatch device
21 Log generation device
22 Terminal device
121 Data accumulation unit
122 Acquisition unit
123 Learning unit
124 Prediction unit
125 Evaluation unit
126 Determination unit
127 Output unit

## Claims

1. An information processing device comprising:
an acquisition unit configured to acquire demand data for each prediction target space of a moving body that conveys a conveyance object loaded onto the moving body;
a learning unit configured to learn a prediction model for predicting the demand data for each prediction target space; and
a determination unit configured to determine whether to combine or divide the prediction target space based on prediction accuracy of the prediction model.

2. The information processing device according to claim 1, wherein the determination unit determines the prediction target space with the prediction accuracy lower than a first threshold as a combination target.

3. The information processing device according to claim 2, wherein the determination unit combines the prediction target spaces of the combination targets.

4. The information processing device according to claim 2, wherein the determination unit combines the prediction target space of the combination target with another prediction target space that has an attribute corresponding to an attribute of the prediction target space of the combination target.

5. The information processing device according to claim 2, wherein the determination unit combines the prediction target space of the combination target with another prediction target space adjacent to the prediction target space of the combination target.

6. The information processing device according to claim 1, wherein the determination unit determines the prediction target space with the prediction accuracy higher than a second threshold as a division target.

7. The information processing device according to claim 1, wherein the determination unit determines the prediction target space in which the number of pieces of demand data satisfies a predetermined reference.

8. The information processing device according to claim 1, wherein the determination unit determines division or non-division in accordance with an attribute of the prediction target space.

9. The information processing device according to claim 1, wherein the determination unit re-determines combination or division of the prediction target space over time.

10. The information processing device according to claim 1, wherein the determination unit re-determines combination or division of the prediction target space with a change in an attribute of the prediction target space.

11. The information processing device according to claim 1, wherein the prediction target space is defined with positional information in horizontal directions and positional information in a height direction.

12. The information processing device according to claim 1, wherein the prediction target space is set based on map information.

13. The information processing device according to claim 1, wherein the moving body is a vehicle and the demand data is data regarding a demand amount of the conveyance object.

14. An information processing method performed by a processor, the method comprising:
acquiring demand data for each prediction target space of a moving body that conveys a conveyance object loaded onto the moving body;
learning a prediction model for predicting the demand data for each prediction target space; and
determining whether to combine or divide the prediction target space based on prediction accuracy of the prediction model.

15. A program causing a computer to function as:
an acquisition unit configured to acquire demand data for each prediction target space of a moving body that conveys a conveyance object loaded onto the moving body;
a learning unit configured to learn a prediction model for predicting the demand data for each prediction target space; and
a determination unit configured to determine whether to combine or divide the prediction target space based on prediction accuracy of the prediction model.
